# EUROPEAN PATENT APPLICATION

(11) **EP 4 007 343 A1**
(43) Date of publication of application: **01.06.2022**
(21) Application number: 20846255.6
(22) Date of filing: 24.07.2020
(51) Int. Cl.: H04W 24/00, H04B 10/079

(54) **METHOD AND APPARATUS FOR ACQUIRING UPLINK BIT ERROR RATE OF RADIO REMOTE UNIT**

(30) Priority: 29.07.2019 CN 201910690825
(71) Applicant: ZTE Corporation, Shenzhen, Guangdong 518057 (CN)
(72) Inventor: QU, Yuzhou, Shenzhen, Guangdong 518057 (CN); XIONG, Linjiang, Shenzhen, Guangdong 518057 (CN)
(74) Representative: Swindell & Pearson Limited
(86) International application number: PCT/CN2020/104641
(87) International publication number: WO 2021/018056

(57) **Abstract**

Provided are a method and apparatus for acquiring an uplink bit error rate of a radio remote unit. The method comprises: a vector signal generator recovering baseband data from a received uplink baseband optical signal, wherein the uplink baseband optical signal is from a radio remote unit; performing channel decoding on the baseband data to obtain a decoded pseudo-noise (PN) sequence, and comparing the decoded PN sequence with a PN sequence locally emitted by the vector signal generator to obtain an uplink bit error rate of the radio remote unit. The problems in the prior art of cumbersome steps of a process for acquiring an uplink bit error rate of a radio remote unit and being unable to be decoupled from a baseband unit are solved.

## Description

### TECHNICAL FIELD

The present disclosure relates to the field of communication technology, and in particular, to a method and apparatus for acquiring an uplink bit error rate of a radio remote unit.

### BACKGROUND

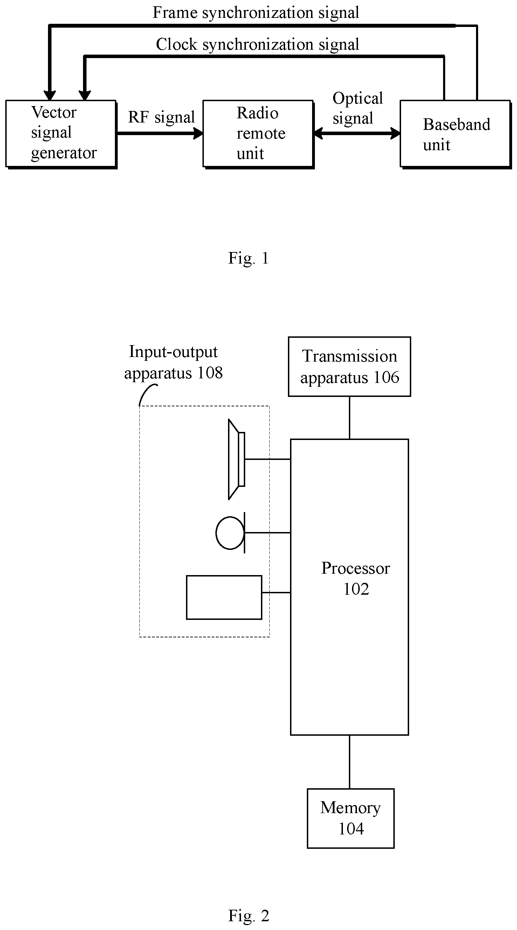

A conventional uplink index test on a radio remote unit requires a vector signal generator and a baseband unit. Fig. 1 is a schematic diagram illustrating connections of the uplink index test on a radio remote unit in the existing technology. As shown in Fig. 1, the vector signal generator synchronizes a clock to the baseband unit through a clock synchronization signal provided by the baseband unit. The vector signal generator generates an uplink radio frequency air interface signal required by the radio remote unit according to a frame synchronization signal provided by the baseband unit, and sends the signal to an antenna port of the radio remote unit. The radio remote unit converts the radio frequency signal into baseband data and transmits the baseband data to the baseband unit through an optical port. The baseband unit decodes an uplink index according to a protocol. In addition, the radio remote unit recovers a system clock of the baseband unit through the optical port, and synchronizes it to the system clock of the baseband unit through an internal phase-locked loop. This is a general method for an uplink index test of a radio remote unit at present. Every time an uplink index of a radio remote unit is tested by using the above-mentioned method, it is necessary to set up a baseband unit test environment separately, as well as to synchronize the clock and a frame rate of the vector signal generator to the baseband unit. The uplink index of a radio remote unit is generally acquired by an uplink bit error rate, and therefore the acquisition of the uplink index may be converted into the acquisition of the uplink bit error rate. The use of such a vector signal generator to test the uplink bit error rate of the radio remote unit may result in a complicated and time-consuming setting up of the test environment, and the method for acquiring an uplink bit error rate of a radio remote unit cannot be decoupled from the baseband unit.

In the existing technology, there is no good solution for the problem that the processes of acquiring an uplink bit error rate of a radio remote unit are cumbersome and cannot be decoupled from the baseband unit.

### SUMMARY

Embodiments of the present disclosure provide a method and apparatus for acquiring an uplink bit error rate of a radio remote unit, to at least solve the problem that the processes of acquiring an uplink bit error rate of a radio remote unit are cumbersome and cannot be decoupled from the baseband unit in the existing technology.

According to an embodiment of the present disclosure, a method for acquiring an uplink bit error rate of a radio remote unit is provided. The method may include: recovering, by a vector signal generator, baseband data from a received uplink baseband optical signal, where the uplink baseband optical signal comes from a radio remote unit; performing channel decoding on the baseband data, to obtain a decoded pseudo-noise (PN) sequence; and comparing the decoded PN sequence with a PN sequence locally transmitted by the vector signal generator, to obtain an uplink bit error rate of the radio remote unit.

According to another embodiment of the present disclosure, an apparatus for acquiring an uplink bit error rate of a radio remote unit is further provided. The apparatus is applicable to the vector signal generator, and may include a recovery module, a decoding module and a comparison module. The recovery module is configured to recover baseband data from a received uplink baseband optical signal, where the uplink baseband optical signal comes from a radio remote unit. The decoding module is configured to perform channel decoding on the baseband data, to obtain a decoded pseudo-noise (PN) sequence. The comparison module is configured to compare the decoded PN sequence with a PN sequence locally transmitted by the vector signal generator, to obtain an uplink bit error rate of the radio remote unit.

According to yet another embodiment of the present disclosure, a vector signal generator is further provided. The vector signal generator may include an uplink processing module configured to recover baseband data from a received uplink baseband optical signal, where the uplink baseband optical signal comes from a radio remote unit. The uplink processing module is further configured to perform channel decoding on the baseband data, to obtain a decoded pseudo-noise (PN) sequence. The uplink processing module is further configured to compare the decoded PN sequence with a PN sequence locally transmitted by the vector signal generator, to obtain an uplink bit error rate of the radio remote unit.

According to yet another embodiment of the present disclosure, a computer-readable storage medium storing computer programs is further provided. The computer programs, when executed by a processor, cause the processor to perform the above-mentioned methods.

According to yet another embodiment of the present disclosure, an electronic device is further provided, including a memory and a processor. The memory stores computer programs which, when executed by the processor, cause the processor to perform the above-mentioned methods.

### BRIEF DESCRIPTION OF DRAWINGS

The accompanying drawings illustrated here are intended to provide a further understanding of the present disclosure and constitute a part of the present disclosure. The illustrative embodiments of the present disclosure and descriptions thereof are intended to illustrate the present disclosure, and do not constitute a limitation on the present disclosure.
Fig. 1 is a schematic connection diagram of an uplink index test of a radio remote unit according to the existing technology;
Fig. 2 is a structural block diagram of hardware of a mobile terminal for a method for acquiring an uplink bit error rate of a radio remote unit according to an alternative embodiment of the present disclosure;
Fig. 3 is a flowchart of a method for sending an access request according to an alternative embodiment of the present disclosure;
Fig. 4 is a schematic connection diagram of an uplink index test of the radio remote unit according to an alternative embodiment of the present disclosure;
Fig. 5 is a configuration flowchart of an uplink index test of the radio remote unit according to an alternative embodiment of the present disclosure;
Fig. 6 is a structural block diagram of an apparatus for acquiring an uplink bit error rate of a radio remote unit according to an alternative embodiment of the present disclosure;
Fig. 7 is a structural block diagram of a vector signal generator according to an alternative embodiment of the present disclosure;
Fig. 8 is a test connection diagram and internal hardware block diagram of a vector signal generator according to an alternative embodiment of the present disclosure;
Fig. 9 is a flowchart of an uplink decoding software processing according to an alternative embodiment of the present disclosure; and
Fig. 10 is a flowchart of a sensitivity test according to an alternative embodiment of the present disclosure.

### DETAILED DESCRIPTION

Hereinafter, the present disclosure will be described in detail with reference to the accompanying drawings and in conjunction with the embodiments. It should be noted that the embodiments in the present disclosure and the features in the embodiments may be combined with each other if not conflicted.

It should be noted that the terms "first", "second" and the like in the description, the claims and the drawings of the present disclosure are used for distinguishing similar objects, but not necessarily used for describing a specific sequence or a precedence order.

The method for sending an access request provided in the embodiments of the present disclosure may be executed in a mobile terminal, a computer terminal, or a similar computing device. Taking running on a mobile terminal as an example, Fig. 2 is a structural block diagram of hardware of a mobile terminal for a method for acquiring an uplink bit error rate of a radio remote unit according to an embodiment of the present disclosure. As shown in Fig. 2, the mobile terminal 10 may include one or more (only one is shown in Fig. 2) processors 102 (the processors 102 may include, without limitation to, a processing device such as a microprocessor, for example MCU or a programmable logic device, for example FPGA) and a memory 104 configured to store data. In another embodiment, the above-mentioned mobile terminal may further include a transmission device 106 and an input-output device 108 configured for communication. A person having ordinary skills in the art can understand that the structure shown in Fig. 2 is only illustrative, and does not limit the structure of the above-mentioned mobile terminal. For example, the mobile terminal 10 may further include more or fewer components than those shown in Fig. 2, or may have a different configuration from that shown in Fig. 2.

The memory 104 may be configured to store a computer program, for example, a software program or a module of application software, more specifically, a computer program corresponding to the method for acquiring the scheduling throughput in the embodiments of the present disclosure. The processor 102 executes the computer program stored in the memory 104 to carry out various functional applications and data processing, i.e., implement the above-mentioned method. The memory 104 may include a high-speed random-access memory, and may further include a non-volatile memory, such as one or more magnetic storage devices, flash memories, or other non-volatile solid-state memories. In some examples, the memory 104 may further include memories remotely located with respect to the processor 102, and these remote memories may be connected to the mobile terminal 10 via a network. Examples of the above-mentioned network include, but not limited to, the Internet, an intranet, a local area network, a mobile communication network and a combination thereof.

The transmission device 106 is configured to receive or send data via a network. Examples of the above-mentioned network may include a wireless network provided by a communication provider of the mobile terminal 10. In an example, the transmission device 106 includes a network interface controller (NIC), which may be connected to other network devices through a base station, to communicate with the Internet. In an example, the transmission device 106 may be a radio frequency (RF) module, which is configured to communicate with the Internet wirelessly.

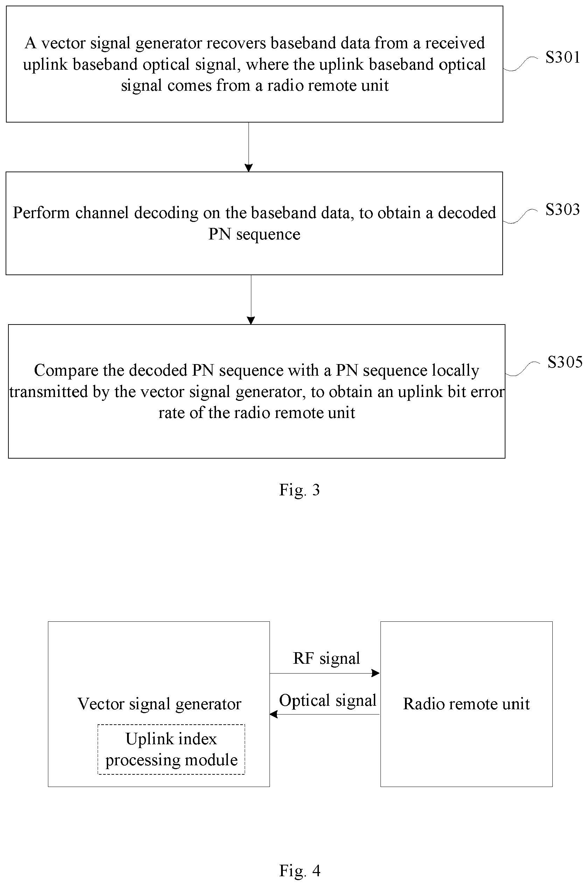

An embodiment of the present disclosure provides a method for acquiring an uplink bit error rate of a radio remote unit. Fig. 3 is a flowchart of a method for acquiring an uplink bit error rate of a radio remote unit in the embodiment of the present disclosure. As shown in Fig. 3, the method includes steps S301 to S305.

At S301, a vector signal generator recovers baseband data from a received uplink baseband optical signal, where the uplink baseband optical signal comes from the radio remote unit.

At S303, channel decoding is performed on the baseband data, to obtain a decoded pseudo-noise (PN) sequence.

At S305, the decoded PN sequence is compared with a PN sequence locally transmitted by the vector signal generator, to obtain the uplink bit error rate of the radio remote unit.

Through the above-mentioned method, the data recovery and channel decoding of the uplink baseband optical signal are all performed at the side of the vector signal generator, solving the problem that in the existing technology, the processes of acquiring an uplink bit error rate of a radio remote unit are cumbersome and cannot be decoupled from the baseband unit, thereby allowing a simple uplink index test environment for the radio remote unit, which is easy to build.

It should be noted that, in the embodiments of the present disclosure, the uplink index of the radio remote unit can be independently tested by adding corresponding software and hardware modules to the vector signal generator, and the test of each uplink index may be converted to the test of the bit error rate of the radio remote unit.

According to an alternative implementation of the present disclosure, the process of recovering, by a vector signal generator, baseband data from a received uplink baseband optical signal at the above-mentioned step S301 may be implemented by following steps: receiving, by the vector signal generator, the uplink baseband optical signal sent by the radio remote unit through an optical port module, and converting the baseband optical signal into an electrical signal; recovering parallel data from the electric signal through a serial-to-parallel conversion module; and recovering the baseband data from the parallel data through an optical port data analysis module.

According to an alternative implementation of the present disclosure, the above-mentioned step S303 may be implemented by following steps: marking a frame header of the baseband data, and performing channel decoding on the baseband data with marked frame header, to obtain the decoded PN sequence.

According to an alternative implementation of the present disclosure, the process of marking a frame header of the baseband data, and performing channel decoding on the baseband data with marked frame header, to obtain the decoded PN sequence may be implemented by following steps: finding out the frame header of the baseband data through a synchronous search module, and marking the frame header; sending the baseband data with marked frame header to a baseband decoding module; and performing, by the baseband decoding module, de-framing according to the frame header, and performing data channel extraction and channel decoding, to obtain the decoded PN sequence.

According to an alternative implementation of the present disclosure, the above-mentioned step S305 may be implemented by following steps: comparing a number of bits of the decoded PN sequence with that of the PN sequence locally transmitted by the vector signal generator to obtain a number of bit errors in transmission, and substituting the number of bit errors and a total number of bits into the following formula to obtain the uplink bit error rate of the radio remote unit: the bit error rate = the number of bit errors in transmission / the total number of bits transmitted ^{∗} 100%.

Alternatively, after obtaining the uplink bit error rate of the radio remote unit, the method further includes: adjusting a radio frequency signal sent to the radio remote unit according to the uplink bit error rate of the radio remote unit; acquiring a corresponding uplink bit error rate of the radio remote unit according to the adjusted radio frequency signal; and acquiring an uplink index of the radio remote unit when the uplink bit error rate of the radio remote unit reaches a preset threshold.

According to the bit error rate currently obtained, the radio frequency signal input to the radio remote unit is automatically changed to obtain multiple bit error rates, to conduct uplink index test (for example, when testing the sensitivity, the radio frequency power sent by the vector signal generator to the radio remote unit is reduced until the bit error rate exceeds a range, and then the sensitivity index of the radio remote unit is obtained).

According to an alternative implementation of the present disclosure, the method further includes: generating, by the vector signal generator, a baseband data of a communication protocol to be tested according to the received communication protocol to be tested; performing digital up-conversion processing on the baseband data of the communication protocol to be tested, and converting processed baseband data of the communication protocol to be tested into an analog signal; modulating and amplifying, by a radio frequency module, the analog signal into a radio frequency air interface signal that meets a requirement of the communication protocol; and sending the radio frequency air interface signal to an antenna port of the radio remote unit through a radio frequency cable.

According to an alternative implementation of the present disclosure, the method further includes attaching, by the vector signal generator, a local clock to serial data, and sending the serial data to the radio remote unit through the optical port module.

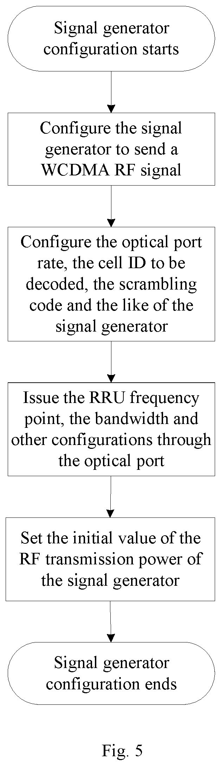

In the embodiment, the WCDMA uplink sensitivity test in 2.1G band is taken as an example, and the hardware design, technical schemes and implementation steps are described in detail with reference to the accompanying drawings. The method and the apparatus are also applicable to radio remote unit devices of other frequency bands and standards. The sensitivity test environment is set up as shown in Fig. 4, and the software test flow of this embodiment is shown in Fig. 5. FIG. 4 is a schematic connection diagram of the uplink index test of the radio remote unit according to the embodiment of the present disclosure, and FIG. 5 is a configuration flowchart of the uplink index test of the radio remote unit according to the embodiment of the present disclosure. As shown in Fig. 5:
A. a signal source is set to send uplink data according to the WCDMA protocol: the frequency channel number is set to 1930, the scrambling code is set to 0 and the transmission power is set to -80 dBm;
B. the signal source optical port rate is set to 1.2288 G, the WCDMA sensitivity test interface is opened, the center frequency channel number is set to 1930, and the scrambling code is set to 0;
C. the signal source optical port receives the uplink data uploaded by radio remote unit, and the signal source analyzes the optical port data according to the CPRI protocol to separate the uplink data to be tested;
D. coarse synchronization is performed on the uplink data to find out an approximate position of the frame head;
E. on the basis of coarse synchronization, fine synchronization is performed on the uplink data to find the exact position of the frame header;
F. physical layer demodulation, including descrambling and despreading, is performed according to the WCDMA protocol;
G. the transmission layer demodulation, including de-interleaving, rate de-matching, de-convolution and de-CRC is performed according to the WCDMA protocol
H. a PN sequence locally transmitted is compared, and the bit error rate is calculated.; and
I. if the calculated bit error rate is within a set range, the transmission power is reduced and the B-H process is cycled; if the bit error rate exceeds the set range, the previous transmission power is the uplink sensitivity of the radio remote unit device; at this point, the sensitivity test is finished.

According to the method for testing an uplink index of a radio remote unit provided by the embodiment, when testing the uplink index of the radio remote unit, it is no longer necessary to set up a baseband unit test environment and connect a synchronization cable, only one vector signal generator and a radio remote unit apparatus to be tested are required, and the environment is simple and quick to set up.

An embodiment of the present disclosure further provides an apparatus for acquiring an uplink bit error rate of a radio remote unit. The apparatus is configured to implement the above-mentioned method embodiments for acquiring an uplink bit error rate of a radio remote unit. What has already been described will not be repeated here. As used below, the term "module" may be a combination of software and/or hardware that can achieve a predetermined function. Although the apparatus described in the following embodiments is preferably implemented in software, the implementation of hardware, or a combination of software and hardware, is also possible and envisaged.

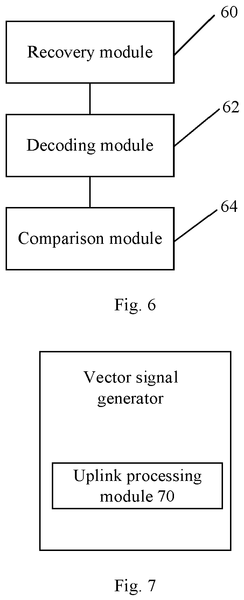

Fig. 6 is a structural block diagram of an apparatus for acquiring an uplink bit error rate of a radio remote unit according to an embodiment of the present disclosure. As shown in Fig. 6, the apparatus is configured to be applied to the vector signal generator, and includes a recovery module 60, a decoding module 62 and a comparison module 64.

The recovery module 60 is configured to recover baseband data from a received uplink baseband optical signal, where the uplink baseband optical signal comes from a radio remote unit;

The decoding module 62 is configured to perform channel decoding on the baseband data, to obtain a decoded pseudo-noise (PN) sequence; and

The comparison module 64 is configured to compare the decoded PN sequence with a PN sequence locally transmitted by the vector signal generator, to obtain an uplink bit error rate of the radio remote unit.

With the above-mentioned apparatus, the recovery module 60 recovers baseband data from a received uplink baseband optical signal, where the uplink baseband optical signal comes from a radio remote unit. The decoding module 62 performs channel decoding on the baseband data, to obtain a decoded PN sequence. The comparison module 64 compares the decoded PN sequence with a PN sequence locally transmitted by the vector signal generator, to obtain an uplink bit error rate of the radio remote unit. Thus, the problem in the existing technology that when performing uplink index test of a radio remote unit, it is cumbersome and time-consuming to set up a test environment, and the uplink index test of the radio remote unit cannot be decoupled from the baseband unit, is solved, thereby providing a simple environment for uplink index test of a radio remote unit, which can be quickly set up.

According to an alternative implementation of the present disclosure, the recovery module 60 includes a receiving unit configured to receive the uplink baseband optical signal sent by the radio remote unit through an optical port module; a conversion unit configured to convert the baseband optical signal into an electrical signal; a first recovery unit configured to recover parallel data from the electric signal through a serial-to-parallel conversion module; and a second recovery unit configured to recover the baseband data from the parallel data through an optical port data analysis module.

According to an alternative implementation of the present disclosure, the decoding module 62 includes: a marking unit configured to mark a frame header of the baseband data; and a decoding unit configured to perform channel decoding on the baseband data with marked frame header, to obtain the decoded PN sequence.

According to an alternative implementation of the present disclosure, the marking unit is further configured to find out the frame header of the baseband data through a synchronous search module, mark the frame header, and send the baseband data with marked frame header to a baseband decoding module. The decoding unit is further configured to perform de-framing according to the frame header, and perform data channel extraction and channel decoding, to obtain the decoded PN sequence.

According to an alternative implementation of the present disclosure, the comparison module 64 includes a comparison unit configured to compare a number of bits of the decoded PN sequence with that of the PN sequence locally transmitted by the vector signal generator to obtain a number of bit errors in transmission, and substitute the number of bit errors and a total number of bits into the following formula to obtain the uplink bit error rate of the radio remote unit: the bit error rate = the number of bit errors in transmission / the total number of bits transmitted ^{∗} 100%.

alternatively, the apparatus further includes an adjustment module. The adjustment module is configured to adjust a radio frequency signal sent to the radio remote unit according to the uplink bit error rate of the radio remote unit; a first acquisition module, configured to acquire a corresponding uplink bit error rate of the radio remote unit according to the adjusted radio frequency signal; and a second acquisition module, configured to acquire an uplink index of the radio remote unit when the uplink bit error rate of the radio remote unit reaches a preset threshold.

According to the bit error rate currently obtained, the radio frequency signal input to the radio remote unit is automatically changed to obtain multiple bit error rates, for uplink index test (for example, when testing the sensitivity, the radio frequency power sent by the vector signal generator to the radio remote unit is reduced until the bit error rate exceeds the range, and then the sensitivity index of the radio remote unit is obtained).

An embodiment of the present disclosure further provides a vector signal generator. The vector signal generator is configured to implement the above-mentioned method embodiments and alternative implementations for acquiring an uplink bit error rate of a radio remote unit, and is further configured to bear the above-mentioned apparatus for acquiring an uplink bit error rate of a radio remote unit. What has already been described will not be repeated here. As used below, the term "module" may be a combination of software and/or hardware that can achieve a predetermined function. Although the apparatus described in the following embodiments is preferably implemented in software, the implementation of hardware, or a combination of software and hardware, is also possible and envisaged.

Fig. 7 is a structural block diagram of a vector signal generator according to an embodiment of the present disclosure. As shown in Fig. 7, the apparatus is configured to be applied to the vector signal generator. The vector signal generator includes an uplink processing module 70.

The uplink processing module 70 is configured to: recover baseband data from a received uplink baseband optical signal, where the uplink baseband optical signal comes from a radio remote unit; perform channel decoding on the baseband data, to obtain a decoded pseudo-noise (PN) sequence; and compare the decoded PN sequence with a PN sequence locally transmitted by the vector signal generator, to obtain an uplink bit error rate of the radio remote unit.

According to an alternative implementation of the present disclosure, the uplink processing module 70 includes: an optical port module, configured to receive the uplink baseband optical signal sent by the radio remote unit, and converting the baseband optical signal into an electrical signal; a serial-to-parallel conversion module, configured to recover parallel data from the electric signal; and an optical port data analysis module, configured to recover the baseband data from the parallel data.

According to an alternative implementation of the present disclosure, the uplink processing module includes a synchronization module and a baseband decoding module. The synchronization module is configured to mark a frame header of the baseband data. The baseband decoding module is configured to perform channel decoding on the baseband data with marked frame header, to obtain the decoded PN sequence.

According to an alternative implementation of the present disclosure, the synchronization module is further configured to find out the frame header of the baseband data through a synchronous search module, mark the frame header, and send the baseband data with marked frame header to a baseband decoding module. The baseband decoding module is further configured to perform de-framing according to the frame header, and perform data channel extraction and channel decoding, to obtain the decoded PN sequence.

According to an alternative implementation of the present disclosure, the uplink processing module 70 is further configured to compare a number of bits of the decoded PN sequence with that of the PN sequence locally transmitted by the vector signal generator to obtain a number of bit errors in transmission, and substitute the number of bit errors and a total number of bits into the following formula to obtain the uplink bit error rate of the radio remote unit: the bit error rate = the number of bit errors in transmission / the total number of bits transmitted ^{∗} 100%.

Alternatively, the uplink processing module 70 is further configured to: adjust a radio frequency signal sent to the radio remote unit according to the uplink bit error rate of the radio remote unit; acquire a corresponding uplink bit error rate of the radio remote unit according to the adjusted radio frequency signal; and acquire an uplink index of the radio remote unit when the uplink bit error rate of the radio remote unit reaches a preset threshold.

According to the bit error rate currently obtained, the radio frequency signal input to the radio remote unit is automatically changed to obtain multiple bit error rates, for uplink index test (for example, when testing the sensitivity, the radio frequency power sent by the vector signal generator to the radio remote unit is reduced until the bit error rate exceeds the range, and then the sensitivity index of the radio remote unit is obtained).

According to an alternative implementation of the present disclosure, the vector signal generator further includes: a control module, a baseband module, an up-conversion module, a digital-to-analog conversion module and a radio frequency module. The control module is configured to receive a communication protocol to be tested and send the communication protocol to be tested to a baseband module; the baseband module. The baseband module is configured to generate baseband data of the communication protocol to be tested. The up-conversion module is configured to perform digital up-conversion processing on the baseband data of the communication protocol to be tested. The digital-to-analog conversion module is configured to convert the processed baseband data of the communication protocol to be tested into an analog signal. The radio frequency module is configured to modulate and amplify the analog signal to obtain a radio frequency air interface signal that meets a requirement of the communication protocol, and send the radio frequency air interface signal to an antenna port of the radio remote unit.

According to baseband module of the present disclosure, the vector signal generator further includes a display module configured to display a result of the uplink index test after obtaining the bit error rate.

The vector signal generator provided by the embodiments of the present disclosure includes not only a vector signal generation module contained in a general vector signal generator, but also an optical interface circuit, a decoding circuit for various communication protocols, and an uplink index analysis algorithm for an optical port coding and decoding protocol and various communication protocols. In addition, the vector signal generator can independently test the uplink index of the radio remote unit and solve the problem that the uplink index test of the radio remote unit cannot be decoupled from the baseband unit. The use of this vector signal generator for the uplink index test of the radio remote unit eliminates the need for a baseband unit.

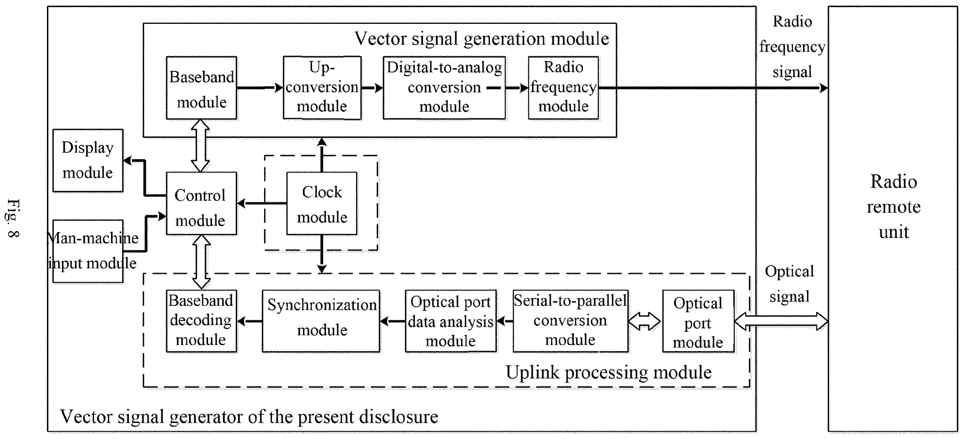

Fig. 8 is a test connection diagram and internal hardware block diagram of the vector signal generator according to the embodiments of the present disclosure. In an alternative implementation of the embodiments of the present disclosure, compared with other vector signal generators, a clock module and an uplink processing module illustrated in the dashed boxes are added. The uplink processing module includes an optical port module, a serial-to-parallel conversion module, an optical port data analysis module, a synchronization module and a baseband decoding module. The clock module generates a clock required by the whole system, and provides clock synchronization and frame synchronization of the vector signal generation module and the uplink processing module, so that the external synchronization cable in Fig. 1 is no longer required. The uplink processing module processes and tests the uplink baseband data uploaded by the radio remote unit.

The example vector signal generator of the present disclosure informs the local baseband module of the communication protocol to be tested input by a man-machine input module through a control module to generate baseband data of the communication protocol to be tested. After being subjected to digital up-conversion by the up-conversion module, the data is sent to the digital-to-analog conversion module to generate an analog signal, which is modulated and amplified by the radio frequency module into a radio frequency air interface signal with the frequency required by the protocol, and the radio frequency air interface signal is sent to the antenna port of the radio remote unit through the radio frequency cable. In addition, the vector signal generator is connected to the radio remote unit through the optical port and receives the uplink baseband optical signal of the radio remote unit. The optical signal is converted into an electrical signal by the optical port circuit. Parallel data is recovered by the serial-to-parallel conversion module. The baseband data is recovered by the optical port data analysis module. The frame header is found by the synchronous search module, and the baseband data with marked frame header is sent to the baseband decoding module. De-framing according to the frame header, data channel extraction and channel decoding are performed in the baseband decoding module. Finally, comparison is made with a Pseudo-noise (PN) sequence locally transmitted to calculate the bit error rate. A result of the uplink index test is displayed by the display module to complete the uplink index test of the radio remote unit. In addition, the vector signal generator attaches the local system clock to the serial data in the serial-to-parallel conversion module, and sends it to the radio remote unit through the optical port module, so that radio remote unit can complete the clock synchronization through the optical port, without additionally requiring a synchronization line.

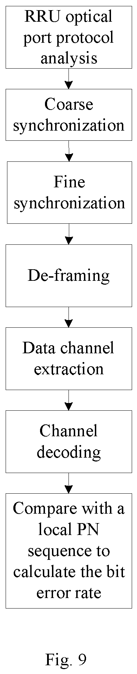

Fig. 9 is a flowchart of uplink decoding software processing according to an embodiment of the present disclosure. As shown in Fig. 9, the vector signal generator receives the optical port data sent by radio remote unit through the optical port, obtains required baseband data by an RRU optical port protocol analysis module, and performs coarse synchronization and fine synchronization on the baseband data of the radio remote unit to obtain the frame header of the baseband data. Then the de-framing module performs de-framing according to the frame header, and performs data channel extraction and channel decoding to obtain a PN sequence, which is then compared with the local PN sequence to calculate the bit error rate, thus completing the uplink index test.

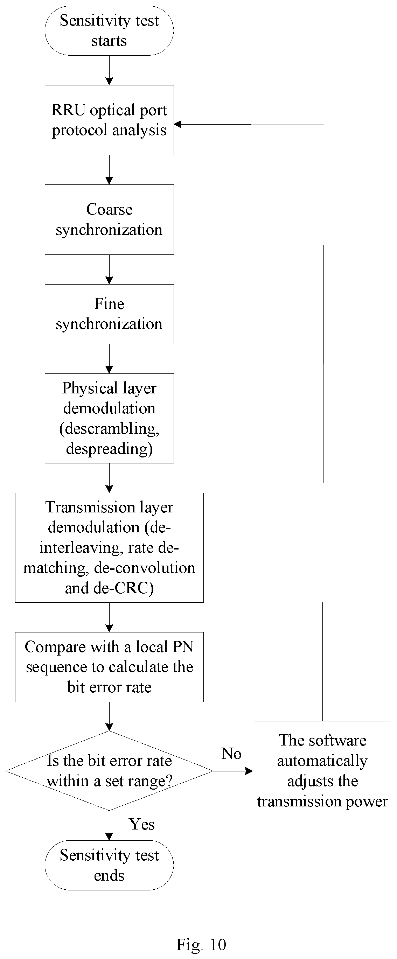

Fig. 10 is a flowchart of a sensitivity test according to an embodiment of the present disclosure. As shown in Fig. 10, the vector signal generator receives an uplink optical signal sent by the radio remote unit, which is subjected to RRU optical port protocol analysis, coarse synchronization and fine synchronization to obtain baseband data. Then, the baseband data is subjected to physical layer demodulation, including descrambling and despreading, and then transmission layer demodulation, including de-interleaving, rate de-matching, de-convolution and de-CRC, to obtain the decoded PN sequence. The decoded PN sequence is compared with the local PN of the vector signal generator to obtain the bit error rate. It is judged whether the bit error rate is within a set range; if no, the software automatically adjusts the transmission power, and the radio remote unit sends the uplink optical signal again; and if yes, the sensitivity test flow ends. With reference to Figs. 5 and 10, an alternative sensitivity test flow of the embodiments of the present disclosure includes steps S1 to S7.

At S1, a signal source is set to send uplink data according to the WCDMA protocol: the radio frequency channel number is set to 1930, the scrambling code is set to 0 and the transmission power is set to -80 dBm.

At S2, the signal source optical port rate is set to 1.2288 G, the WCDMA sensitivity test interface is opened, the center frequency channel number is set to 1930, and the scrambling code is set to 0.

At S3, the signal source optical port receives the uplink data uploaded by radio remote unit, and the signal source analyzes the optical port data according to the CPRI protocol to separate the uplink data to be tested.

At S4, coarse synchronization is performed on the uplink data to find out an approximate position of the frame head.

At S4, on the basis of coarse synchronization, fine synchronization is performed on the uplink data to find the exact position of the frame header.

At S5, physical layer demodulation, including descrambling and despreading, is performed according to the WCDMA protocol.

At S6, the transmission layer demodulation, including de-interleaving, rate de-matching, de-convolution and de-CRC is performed according to the WCDMA protocol.

At S7, it is compared with a PN sequence locally transmitted, and the bit error rate is calculated.

If the calculated bit error rate is within a set range, the transmission power is reduced and the B-H process is cycled. If the bit error rate exceeds the set range, the previous transmission power is the uplink sensitivity of the radio remote unit device. At this point, the sensitivity test is finished.

The present disclosure discloses a vector signal generator for independently testing an uplink index of a radio remote unit. The vector signal generator includes: (1) an optical port coding and decoding circuit and an uplink baseband decoding circuit for communication with a radio remote unit optical port, including an optical port circuit, a serial-to-parallel conversion (serializer/deserializer) circuit, a synchronization circuit, a decoding circuit and the like; (2) optical port protocol coding and decoding software for communication with the radio remote unit. In order to test the uplink index of the uplink radio remote unit supporting various communication protocols, this vector signal generator is designed with the uplink coding and decoding software module for various communication protocols, which is convenient for decoding the uplink data of various communication protocols and calculating the bit error rate.

An embodiment of the present disclosure further provides a computer-readable storage medium storing a computer program which, when executed by a processor, causes the processor to perform the steps in any of the above-mentioned method embodiments.

Alternatively, in the embodiment, the above-mentioned storage media may include, but not limited to, an USB flash disk, a read-only memory (ROM), a random-access memory (RAM), a removable hard disk, a magnetic disk or an optical disk and other media that can store a computer program.

An embodiment of the present disclosure further provides an electronic device including a memory and a processor. The memory stores a computer program which, when executed by the processor, causes the processor to perform the steps in any of the above-mentioned method embodiments.

Alternatively, the above-mentioned electronic device may further include a transmission device and an input-output device. The transmission device is connected to the above-mentioned processor, and the input-output device is connected to the above-mentioned processor.

For examples in this embodiment, reference may be made to the examples described in the above-mentioned embodiments and alternative implementations. What has already been described will not be repeated here.

Obviously, a person having ordinary skills in the art should understand that the above-mentioned modules or steps of the present disclosure may be implemented by a general-purpose computing device, which may be concentrated on a single computing device or distributed on a network composed of multiple computing devices, and alternatively, they may be implemented by program codes executable by the computing device, so that they may be stored in a storage device and executed by the computing device. And in some cases, the steps shown or described may be performed in a different order than here, or may be separately made into individual integrated circuit modules, or multiple modules or steps among them may be made into a single integrated circuit module. Thus, the present disclosure is not limited to any specific combination of hardware and software.

What has been described above is only alternative embodiments of the present disclosure, and are not intended to limit the present disclosure. For a person having ordinary skills in the art, various modifications and changes may be made to the present disclosure. Any modification, equivalent replacement, improvement, and the like made within the principles of the present disclosure shall fall within the protection scope of the present disclosure.

## Claims

1. A method for acquiring an uplink bit error rate of a radio remote unit, comprising:
recovering, by a vector signal generator, baseband data from an uplink baseband optical signal received from a radio remote unit;
performing channel decoding on the baseband data, to obtain a decoded pseudo-noise (PN) sequence; and
comparing the decoded PN sequence with a PN sequence locally transmitted by the vector signal generator, to obtain an uplink bit error rate of the radio remote unit.

2. The method of claim 1, wherein the recovering, by a vector signal generator, baseband data from a received uplink baseband optical signal comprises:
receiving, by the vector signal generator, the uplink baseband optical signal sent by the radio remote unit through an optical port module, and converting the baseband optical signal into an electrical signal;
recovering parallel data from the electric signal through a serial-to-parallel conversion module; and
recovering the baseband data from the parallel data through an optical port data analysis module.

3. The method of claim 1, wherein the performing channel decoding on the baseband data, to obtain a decoded PN sequence comprises:
marking a frame header of the baseband data, and performing channel decoding on the baseband data with marked frame header, to obtain the decoded PN sequence.

4. The method of claim 3, wherein the marking a frame header of the baseband data, and performing channel decoding on the baseband data with marked frame header, to obtain the decoded PN sequence comprises:
finding out a frame header of the baseband data through a synchronous search module, and marking the frame header;
sending the baseband data with marked frame header to a baseband decoding module; and
performing, by the baseband decoding module, de-framing according to the frame header, data channel extraction and channel decoding, to obtain the decoded PN sequence.

5. The method of claim 1, wherein the comparing the decoded PN sequence with a PN sequence locally transmitted by the vector signal generator, to obtain an uplink bit error rate of the radio remote unit comprises:
comparing the decoded PN sequence with the PN sequence locally transmitted by the vector signal generator to obtain a number of bit errors in transmission, and substituting the number of bit errors and a total number of bits into a following formula to obtain the uplink bit error rate of the radio remote unit:
the bit error rate = the number of bit errors in transmission / the total number of bits transmitted ^{∗} 100%.

6. The method of claim 5, wherein after obtaining the uplink bit error rate of the radio remote unit, the method further comprises:
adjusting a radio frequency signal sent to the radio remote unit according to the uplink bit error rate of the radio remote unit;
acquiring a corresponding uplink bit error rate of the radio remote unit according to the adjusted radio frequency signal; and
acquiring an uplink index of the radio remote unit in response to the uplink bit error rate of the radio remote unit reaching a preset threshold.

7. The method of any one of claims 1 to 6, wherein the method further comprises:
generating baseband data of a communication protocol to be tested according to the received communication protocol to be tested;
performing digital up-conversion processing on the baseband data of the communication protocol to be tested, and converting processed baseband data of the communication protocol to be tested into an analog signal;
modulating and amplifying, by a radio frequency module, the analog signal into a radio frequency air interface signal that meets a requirement of the communication protocol; and
sending the radio frequency air interface signal to an antenna port of the radio remote unit through a radio frequency cable.

8. The method of any one of claims 1 to 6, wherein the method further comprises:
attaching, by the vector signal generator, a local clock to serial data, and sending the serial data to the radio remote unit through the optical port module.

9. An apparatus for acquiring an uplink bit error rate of a radio remote unit, applicable to a vector generator, the apparatus comprising:
a recovery module, configured to recover baseband data from an uplink baseband optical signal received from a radio remote unit;
a decoding module, configured to perform channel decoding on the baseband data, to obtain a decoded pseudo-noise (PN) sequence; and
a comparison module, configured to compare the decoded PN sequence with a PN sequence locally transmitted by the vector signal generator, to obtain an uplink bit error rate of the radio remote unit.

10. A vector signal generator, comprising an uplink processing module, wherein the uplink processing module is configured to:
recover baseband data from an uplink baseband optical signal received from a radio remote unit;
perform channel decoding on the baseband data, to obtain a decoded pseudo-noise (PN) sequence; and
compare the decoded PN sequence with a PN sequence locally transmitted by the vector signal generator, to obtain an uplink bit error rate of the radio remote unit.

11. The vector signal generator of claim 10, wherein the uplink processing module comprises:
an optical port module, configured to receive the uplink baseband optical signal sent by the radio remote unit, and converting the baseband optical signal into an electrical signal;
a serial-to-parallel conversion module, configured to recover parallel data from the electric signal; and
an optical port data analysis module, configured to recover the baseband data from the parallel data.

12. The vector signal generator of claim 10, wherein the uplink processing module comprises:
a synchronization module, configured to mark a frame header of the baseband data; and
a baseband decoding module, configured to perform channel decoding on the baseband data with marked frame header, to obtain the decoded PN sequence.

13. The vector signal generator of claim 12, wherein:
the synchronization module is further configured to find out the frame header of the baseband data through a synchronous search module, mark the frame header, and send the baseband data with marked frame header to a baseband decoding module; and
the baseband decoding module is further configured to, perform de-framing according to the frame header, data channel extraction and channel decoding, to obtain the decoded PN sequence.

14. The vector signal generator of one of claims 10 to 13, wherein the vector signal generator further comprises:
a control module, configured to receive a communication protocol to be tested and send the communication protocol to be tested to a baseband module;
the baseband module, configured to generate baseband data of the communication protocol to be tested;
an up-conversion module configured to perform digital up-conversion processing on the baseband data of the communication protocol to be tested;
a digital-to-analog conversion module, configured to convert the processed baseband data of the communication protocol to be tested into an analog signal; and
a radio frequency module, configured to modulate and amplify the analog signal to obtain a radio frequency air interface signal that meets a requirement of the communication protocol, and send the radio frequency air interface signal to an antenna port of the radio remote unit.

15. The vector signal generator of any one of claims 10 to 13, wherein the vector signal generator further comprises:
a display module, configured to display a result of an uplink index test after obtaining the bit error rate.

16. A computer-readable storage medium storing a computer program which, when executed by a processor, causes the processor to carry out the method of one of claims 1 to 8.

17. An electronic device, comprising a memory and a processor, wherein the memory stores a computer program which, when executed by a processor, causes the processor to carry out the method of one of claims 1 to 8.
